# EUROPEAN PATENT SPECIFICATION

(11) **EP 3 023 220 B1**
(45) Date of publication and mention of the grant of the patent: **03.01.2018**
(21) Application number: 15194197.8
(22) Date of filing: 12.11.2015
(51) Int. Cl.: B29C 45/17, F16B 7/18, B29C 45/50, F16D 1/10

(54) **INJECTION UNIT**
EINSPRITZEINHEIT
UNITÉ D'INJECTION

(30) Priority: 21.11.2014 JP 2014237052
(43) Date of publication of application: 25.05.2016
(73) Proprietor: SUMITOMO HEAVY INDUSTRIES, LTD., Tokyo 141-6025 (JP)
(72) Inventor: TAKEUCHI, Shigeru, Chiba-shi, Chiba 263-0001 (JP); KOBAYASHI, Akihisa, Chiba, Chiba 263-0001 (JP)
(74) Representative: Louis Pöhlau Lohrentz

(56) References cited:
- DE-A1- 4 223 489
- JP-A- H01 115 615
- JP-A- 2010 058 275
- JP-U- S5 139 148
- US-A1- 2013 101 692

## Description

### BACKGROUND OF THE INVENTION

### Description of Related Art

The present invention relates to an injection unit.

An injection molding machine includes an injection unit which fills a mold unit with a molding material. For example, the injection unit includes a cylinder, a screw, and a drive unit. The cylinder heats the molding material supplied into the cylinder. The screw is disposed within the cylinder so as to be movable forward and backward and rotatable. The drive unit includes a plasticizing motor which rotates the screw, an injection motor which moves the screw forward and rearward, a drive shaft which transmits a driving force of the plasticizing motor and a driving force of the injection motor to the screw, or the like. The drive shaft and the screw are connected to each other by a coupling or the like.

German Patent Application DE 42 23 489 A1 discloses an injection molding machine with a screw having a spline shaft at one end that is coupled to a drive shaft. Pivotally mounted C-shaped latches can be moved against a shoulder in front of the spline shaft and pressed via a ring-shaped element towards the drive shaft.

United States Patent Application US 2013/101692 A1 discloses an injection molding machine with a screw having a spline shaft at one end that is coupled to a drive shaft. Retainers can be moved into a groove located at the proximal end of the spline shaft and pressed via a pressing ring towards the drive shaft.

[Patent Document 1] Japanese Unexamined Patent Application Publication No. 2011-183705

The screw is vibrated in an axial direction with respect to the drive shaft due to a clearance of the coupling, and failure such as abnormal wear or abnormal deformation may occur.

### SUMMARY OF THE INVENTION

The present invention is made in consideration of the above-described problems, and an object thereof is to provide an injection unit capable of reducing failures.

In order to achieve the above-described object, according claim 1 of the present invention, there is provided an injection unit configured to fill a mold unit with a molding material, including: a screw in which a screw shaft and a spline shaft are formed to be coaxial with each other and a fitting groove is formed between the screw shaft and the spline shaft; a receiving member configured to receive an end portion opposite to the fitting groove in both end portions of the spline shaft; a pushing member configured to press the spline shaft from a side opposite to the receiving member; and a pressing ring configured to fasten the spline shaft in an axial direction using the pushing member and the receiving member by pressing the pushing member toward the receiving member, in which the pushing member is formed in a ring shape, and is divided into a plurality of ring pieces in a circumferential direction, each ring piece is fitted into the fitting groove, and the pressing ring is integrally formed over the entire circumference, and presses each ring piece to a side surface of the spline shaft side in both side surfaces of the fitting groove, further there is a coupling that is fastened to or integrally formed with the drive shaft, and the pressing ring is fastened to the coupling by a pressing bolt, and a gap is formed in each of a portion between the coupling and the pressing ring and a portion between the coupling and the pushing member.

According to the aspect of the present invention, the injection unit capable of reducing failures is provided.

### BRIEF DESCRIPTION OF THE DRAWINGS

Fig. 1 is a view showing an injection unit of an injection molding machine according to an embodiment of the present invention.
Fig. 2 is a view showing a main portion of the injection unit according to the embodiment of the present invention.

### DETAILED DESCRIPTION OF THE INVENTION

Hereinafter, an embodiment of the present invention is described with reference to the drawings. In addition, in each drawing, the same or corresponding reference numerals are assigned to the same or corresponding configuration, and descriptions thereof are omitted.

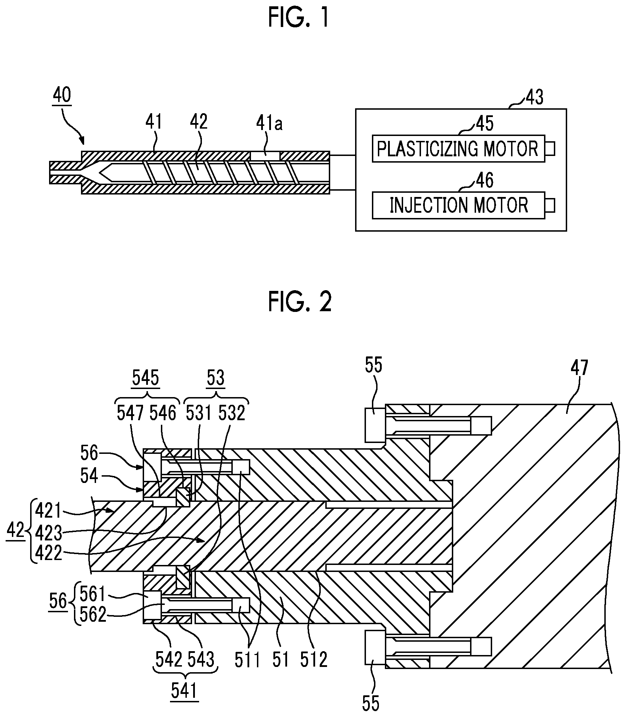

Fig. 1 is a view showing an injection molding machine according to an embodiment of the present invention. As shown in Fig. 1, the injection molding machine includes an injection unit 40.

The injection unit 40 fills a mold unit with a molding material. For example, the injection unit 40 includes a cylinder 41, a screw 42, and a drive unit 43. In descriptions of the injection unit 40, a movement direction (left direction in Fig. 1) of the screw 42 during filling is referred to as forward, and a movement direction (right direction in Fig. 1) of the screw 42 during plasticizing is referred to as rearward.

The cylinder 41 heats a molding material which is supplied from a supply port 41a. The supply port 41a is formed on a rear portion of the cylinder 41. A heat source such as a heater is provided on an outer circumference of the cylinder 41.

The screw 42 is disposed within the cylinder 41 so as to be movable forward and backward and rotatable.

The drive unit 43 includes a plasticizing motor 45 which rotates the screw 42 and an injection motor 46 which moves the screw 42 forward and rearward.

The plasticizing motor 45 rotates the screw 42, and a molding material is fed forward along spiral grooves of the screw 42. The molding material is gradually melted by heat from the cylinder 41 while being fed forward. The screw 42 moves rearward according to a liquid molding material being fed to the front side of the screw 42 and accumulated in a front portion of the cylinder 41.

The injection motor 46 moves the screw 42 forward. Accordingly, a cavity space of a mold unit is filled with the liquid molding material accumulated in the front side of the screw 42. Thereafter, the injection motor 46 presses the screw 42 forward and a pressure is applied to the molding material in the cavity space. Accordingly, a molding material can be replenished when there is a deficiency thereof. A movement conversion mechanism which converts a rotation movement of the injection motor 46 into a linear movement of the screw 42 is provided between the injection motor 46 and the screw 42.

Fig. 2 is a view showing a main portion of the injection unit according to the embodiment of the present invention. As shown in Fig. 2, the injection unit 40 includes the screw 42, a drive shaft 47, a coupling 51, a pushing member 53, a pressing ring 54, or the like.

The screw 42 includes a screw shaft 421, a spline shaft 422, and a fitting groove 423. The screw shaft 421 is inserted into the cylinder 41 and forms spiral grooves which feed the molding material supplied into the cylinder 41. The spline shaft 422 protrudes rearward from the cylinder 41 and is formed so as to be coaxial with the screw shaft 421. The fitting groove 423 is annularly formed between the screw shaft 421 and the spline shaft 422.

The drive shaft 47 transmits a driving force of the plasticizing motor 45 (refer to Fig. 1) and a driving force of the injection motor 46 (refer to Fig. 1) to the screw 42. The drive shaft 47 functions as a receiving member which receives an end portion (a rear end portion of the spline shaft 422) opposite to the fitting groove 423 in both end portions of the spline shaft 422.

The coupling 51 includes a spline hole 512 corresponding to the spline shaft 422. The spline shaft 422 is inserted into the spline hole 512, is spline-connected to the coupling 51, and rotates along with the coupling 51.

The coupling 51 is fastened to the drive shaft 47 using fastening bolts 55. The plurality of fastening bolts 55 are parallel to the screw 42 and are disposed at intervals around the screw 42. The coupling 51 moves forward and rearward along with the drive shaft 47 and rotates along with the drive shaft 47.

In addition, in Fig. 2, the coupling 51 is formed separately from the drive shaft 47. However, the coupling 51 may be integrally formed with the drive shaft 47.

The pushing member 53 presses the spline shaft 422 from a side opposite to the drive shaft 47. The pushing member 53 is formed in a ring shape, and is divided into two ring pieces 531 and 532 in a circumferential direction. Each of the ring pieces 531 and 532 is fitted into the fitting groove 423 from the outside in the radial direction of the screw 42. In addition, in Fig. 2, the pushing member 53 is divided into two ring pieces. However, the pushing member 53 may be divided into three or more ring pieces.

The pressing ring 54 presses the pushing member 53 toward the drive shaft 47. Accordingly, the spline shaft 422 is fastened to the coupling 51 in an axial direction of the spline shaft 422 by the pushing member 53 and the drive shaft 47. Accordingly, a clearance in the axial direction is removed, it is possible to prevent vibration of the screw 42 in the axial direction with respect to the drive shaft 47, and it is possible to reduce failures such as abnormal wear or abnormal deformation.

The pressing ring 54 is fastened to the coupling 51 by a pressing bolt 56 or the like. The pressing bolt 56 is parallel to the screw 42, and a plurality of pressing bolts 56 are disposed at intervals around the screw 42. By fastening the pressing bolts 56, the pressing ring 54 presses the pushing member 53 toward the drive shaft 47.

In a state where the spline shaft 422 is fastened in the axial direction by the pushing member 53 and the drive shaft 47, the spline shaft 422 protrudes forward further than the coupling 51. Accordingly, a gap is formed in each of a portion between the coupling 51 and the pressing ring 54 and a portion between the coupling 51 and the pushing member 53. Compared to a case where a gap is not formed therebetween, it is possible to more efficiently convert a force fastening the pressing bolt 56 into a force fastening the spline shaft 422 in the axial direction.

The pressing ring 54 includes attachment holes 541 to which the pressing bolts 56 are attached. Each of the attachment holes 541 includes a large diameter hole portion 542 into which a head portion 561 of the pressing bolt 56 is inserted and a small diameter hole portion 543 into which a shaft portion 562 of the pressing bolt 56 is inserted. Since the head portion 561 of the pressing bolt 56 does not protrude forward from the pressing ring 54, it is possible to prevent interference between the pressing bolt 56 and the cylinder 41.

The coupling 51 includes screw holes 511 which are screwed to the shaft portions 562 of the pressing bolts 56. In addition, the disposition of the screw holes 511 and the attachment holes 541 may be reversed, the screw holes 511 may be formed in the pressing ring 54, and the attachment holes 541 may be formed in the coupling 51.

The pressing ring 54 is integrally formed over the entire circumference, and presses each of the ring pieces 531 and 532 to a side surface of the spline shaft 422 side in both side surfaces of the fitting groove 423. The pressing ring 54 is formed separately from the pushing member 53, and is seamlessly formed in the circumferential direction unlike the pushing member 53. Accordingly, compared to a case where the pressing ring 54 is integrally formed with the pushing member 53 and is divided in the circumferential direction similarly to the pushing member 53, it is possible to increase durability of a mechanism fastening the spline shaft 422 and reduce failures.

The pressing ring 54 includes an insertion hole 545 through which the screw 42 is inserted. The insertion hole 545 is larger than at least one (both in Fig. 2) of the screw shaft 421 and the spline shaft 422. At least one of the screw shaft 421 and the spline shaft 422 can be inserted into the insertion hole 545, and the pressing ring 54 is not divided in the circumferential direction unlike the pushing member 53. The pressing ring 54 can be seamlessly formed in the circumferential direction, and it is possible to prevent deformation of the pressing ring 54 or the like.

The insertion hole 545 includes a large diameter portion 546 to which the pushing member 53 is fitted, and a small diameter portion 547 which is smaller than an outer diameter of the pushing member 53 and is larger than an inner diameter of the pushing member 53. A step surface between the large diameter portion 546 and the small diameter portion 547 presses the pushing member 53.

The pressing ring 54 includes a concave portion corresponding to the shape of the pushing member 53.

Hereinbefore, the embodiment of the injection molding machine or the like is described. However, the present invention is not limited to the embodiment or the like, and various modifications and improvements may be applied within a scope of the gist of the present invention described in claims.

For example (the example does not form part of the invention) in the state where the spline shaft 422 is fastened in the axial direction by the pushing member 53 and the drive shaft 47, the gap between the coupling 51 and the pushing member 53 may not be formed. In this case, the coupling 51 and the pushing member 53 may not be formed separately from each other, and may be integrally formed. The pressing ring 54 presses the pushing member 53 toward the drive shaft 47. Accordingly, the pushing member 53 is elastically deformed, and the spline shaft 422 can be fastened in the axial direction by the pushing member 53 and the drive shaft 47. Similarly, in the state where the spline shaft 422 is fastened in the axial direction by the pushing member 53 and the drive shaft 47, the gap between the coupling 51 and the pressing ring 54 may not be formed. In addition, in the state where the spline shaft 422 is fastened in the axial direction by the pushing member 53 and the drive shaft 47, the spline shaft 422 may not protrude forward further than the coupling 51, and for example, the front end surface of the spline shaft 422 may be flush with the front end surface of the coupling 51.

The injection unit 40 of the embodiment is an inline screw type. However, the injection unit 40 may be a preplasticating type. In the preplasticating type injection unit, a molding material melted in a plasticization cylinder is supplied to an injection cylinder, and the molding material is injected from the injection cylinder into the mold unit. A screw is disposed within the plasticization cylinder so as to be rotatable or is disposed within the plasticization cylinder so as to be rotatable and movable forward and backward, and a plunger is disposed within the injection cylinder so as to be movable forward and backward.

40: injection unit
41: cylinder
42: screw
421: screw shaft
422: spline shaft
423: fitting groove
43: drive unit
45: plasticizing motor
46: injection motor
47: drive shaft
51: coupling
53: pushing member
531, 532: ring piece
54: pressing ring
545: insertion hole

## Claims

1. An injection unit (1) configured to fill a mold unit with a molding material, comprising:
a screw (42) in which a screw shaft (421) and a spline shaft (422) are formed to be coaxial with each other and a fitting groove (423) is formed between the screw shaft (421) and the spline shaft (422);
a receiving member (47) configured to receive an end portion opposite to the fitting groove (423) in both end portions of the spline shaft (422);
a pushing member (53) configured to press the spline shaft (422) from a side opposite to the receiving member (47); and
a pressing ring (54) configured to fasten the spline shaft (422) in an axial direction using the pushing member (53) and the receiving member (47) by pressing the pushing member (53) toward the receiving member (47),
a coupling (51) that is formed separately or integrally with the drive shaft (47),
wherein the pushing member (53) is formed in a ring shape, and is divided into a plurality of ring pieces (531, 532) in a circumferential direction,
wherein each ring piece is fitted into the fitting groove (423), and
wherein the pressing ring (54) is integrally formed over the entire circumference, and presses each ring piece to a side surface of the spline shaft (422) side in both side surfaces of the fitting groove (423),
**characterized in that**
the pressing ring (54) is fastened to the coupling (51) by a pressing bolt (56), and
a gap is formed in each of a portion between the coupling (51) and the pressing ring (54) and a portion between the coupling (51) and the pushing member (53).

2. The injection unit according to claim 1,
wherein the pressing ring (54) includes an insertion hole (545) into which the screw (42) is inserted, and
wherein the insertion hole (545) is larger than at least one of the screw shaft (421) and the spline shaft (422).

## Patentansprüche

1. Einspritzeinheit (1), die konfiguriert ist, eine Gießformeinheit mit einem Gießmaterial zu füllen, und Folgendes umfasst:
eine Schnecke (42), in der eine Schneckenwelle (421) und eine Keilwelle (422) zueinander koaxial ausgebildet sind und eine Passnut (423) zwischen der Schneckenwelle (421) und der Keilwelle (422) ausgebildet ist;
ein Aufnahmeelement (47), das konfiguriert ist, einen gegenüber der Passnut (423) befindlichen Endabschnitt in beiden Endabschnitten der Keilwelle (422) aufzunehmen;
ein Druckelement (53), das konfiguriert ist, die Keilwelle (422) von einer dem Aufnahmeelement (47) gegenüber befindlichen Seite her zu pressen; und
einen Pressring (54), der konfiguriert ist, die Keilwelle (422) in axialer Richtung unter Verwendung des Druckelements (53) und des Aufnahmeelements (47) durch Pressen des Druckelements (53) zu dem Aufnahmeelement (47) hin zu befestigen,
eine Kopplung (51), die getrennt von oder einteilig mit der Antriebswelle (47) ausgebildet ist,
wobei das Druckelement (53) ringförmig ausgebildet ist und in Umfangsrichtung in mehrere Ringteile (531, 532) unterteilt ist,
wobei jeder Ringteil in die Passnut (423) eingepasst ist und
wobei der Pressring (54) einteilig über den gesamten Umfang ausgebildet ist und jeden Ringteil zu einer seitlichen Oberfläche auf Seiten der Keilwelle (422) auf beiden seitlichen Oberflächen der Passnut (423) presst,
**dadurch gekennzeichnet, dass**
der Pressring (54) an der Kopplung (51) durch einen Pressbolzen (56) befestigt ist und
sowohl in einem Abschnitt zwischen der Kopplung (51) und dem Pressring (54) als auch in einem Abschnitt zwischen der Kopplung (51) und dem Druckelement (53) ein Spalt ausgebildet ist.

2. Einspritzeinheit nach Anspruch 1,
wobei der Pressring (54) ein Einsetzloch (545) enthält, in das die Schnecke (42) eingesetzt ist, und
das Einsetzloch (545) größer als die Schneckenwelle (421) und/oder die Keilwelle (422) ist.

## Revendications

1. Unité d'injection (1) configurée pour remplir une unité de moule avec un matériau de remplissage, comprenant :
une vis (42) dans laquelle un arbre à vis (421) et un arbre cannelé (422) sont formés afin d'être coaxiaux entre eux et une rainure de montage (423) est formée entre l'arbre à vis (421) et l'arbre cannelé (422) ;
un élément de réception (47) configuré pour recevoir une partie d'extrémité opposée à la rainure de montage (423) dans les deux parties d'extrémité de l'arbre cannelé (422) ;
un élément de poussée (53) configuré pour comprimer l'arbre cannelé (422) à partir d'un côté opposé à l'élément de réception (47) ; et
une bague de pression (54) configurée pour fixer l'arbre cannelé (422) dans une direction axiale à l'aide de l'élément de poussée (53) et l'élément de réception (47) en comprimant l'élément de poussée (53) vers l'élément de réception (47),
un couplage (51) qui est formé séparément ou de manière solidaire avec l'arbre d'entraînement (47),
dans laquelle l'élément de poussée (53) est formé selon une forme annulaire et est divisé en une pluralité de pièces annulaires (531, 532) dans une direction circonférentielle,
dans laquelle chaque pièce annulaire est montée dans la rainure de montage (423), et
dans laquelle la bague de pression (54) est formée de manière solidaire sur toute la circonférence, et comprime chaque pièce annulaire sur une surface latérale du côté de l'arbre cannelé (422) dans les deux surfaces latérales de la rainure de montage (423),
**caractérisée en ce que** :
la bague de pression (54) est fixée au couplage (51) par un boulon de pression (56), et
un espace est formé dans chacune parmi une partie entre le couplage (51) et la bague de pression (54) et une partie entre le couplage (51) et l'élément de poussée (53).

2. Unité d'injection selon la revendication 1,
dans laquelle la bague de pression (54) comprend un trou d'insertion (545) dans lequel la vis (42) est insérée, et
dans laquelle le trou d'insertion (545) est plus grand qu'au moins l'un parmi l'arbre à vis (421) et l'arbre cannelé (422).
